# EUROPEAN PATENT SPECIFICATION

(11) **EP 0 998 143 B1**
(45) Date of publication and mention of the grant of the patent: **02.04.2003**
(21) Application number: 99402619.3
(22) Date of filing: 22.10.1999
(51) Int. Cl.: H04N 5/46, H04N 5/775

(54) **Automatic discrimination device of broadcasting type for video cassette recorder, and method therefor**
Einrichtung und Verfahren für einen Videorekorder zur automatischen Erfassung der Rundfunkbetriebsart
Dispositif et procédé de la discrimination automatique de type de télédiffusion pour un magnétoscope vidéo

(30) Priority: 23.10.1998 KR 4452998
(43) Date of publication of application: 03.05.2000
(73) Proprietor: LG ELECTRONICS INC., Seoul (KR)
(72) Inventor: Jun, Yong-Jin, Jungrang-ku, Seoul (KR)
(74) Representative: Fort, Jacques

(56) References cited:
- EP-A- 0 596 687
- US-A- 4 688 082
- JONG GYU KIM ET AL: "HDTV SERIAL INTERFACE SYSTEM" IEEE TRANSACTIONS ON CONSUMER ELECTRONICS,US,IEEE INC. NEW YORK, vol. 41, no. 2, 1 May 1995 (1995-05-01), pages 258-261, XP000520182 ISSN: 0098-3063
- "COMBINED MULTISTANDARD TV AND VCR APPARATUS" RESEARCH DISCLOSURE,GB,INDUSTRIAL OPPORTUNITIES LTD. HAVANT, no. 363, 1 July 1994 (1994-07-01), pages 358-359, XP000461308 ISSN: 0374-4353

## Description

### BACKGROUND OF THE INVENTION

### 1. Field of the Invention

The present invention relates to an automatic discrimination device of a broadcasting type for a videocassette recorder VCR using a television TV, and a method therefor, and in particular to an automatic discrimination device of a broadcasting type for a videocassette recorder VCR wherein the VCR receives a broadcasting type data detected from the TV, and performs a VCR operation, by interface-processing data between the TV and the VCR by using an A/V link system, especially a next view link system, and a method therefor.

### 2. Description of the Background Art

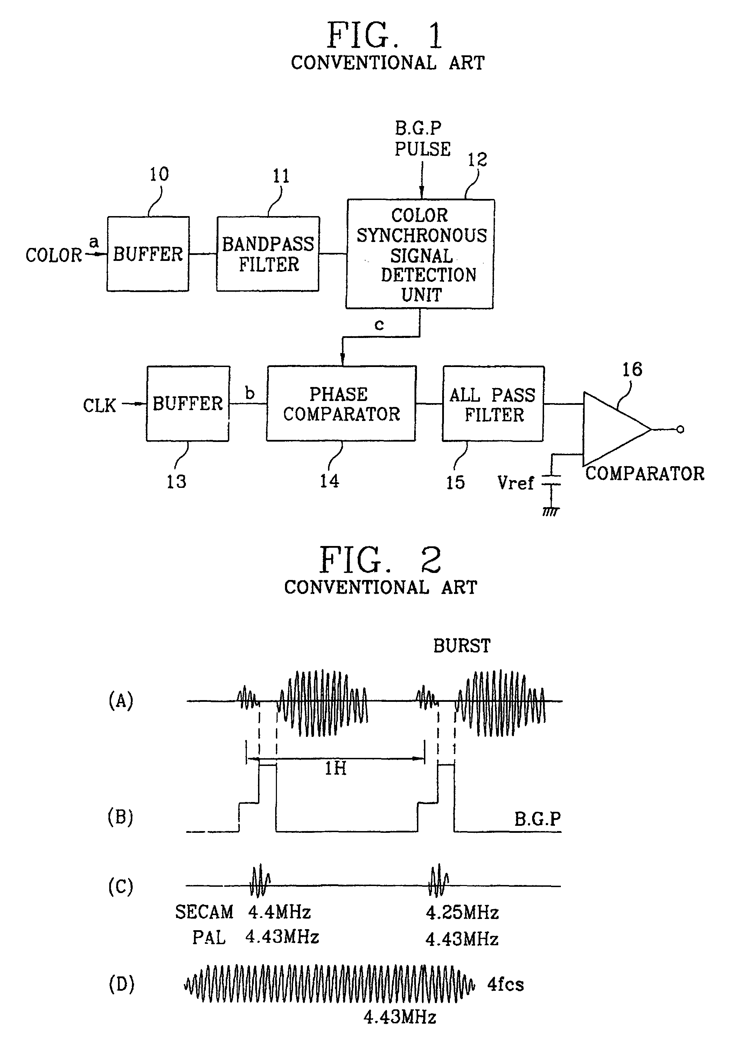

Figure 1 is a schematic block diagram illustrating a discrimination device of a broadcasting type using a PLL method ,As depicted therein, the discrimination device of the broadcasting type includes: a buffer 10 receiving a pure color signal through an antenna or input terminal, and buffering the signal; a bandpass filter 11 bandpass-filtering the signal buffered in the buffer 10; a color synchronous signal detecting unit 12 detecting a color synchronous signal of the filtered color signal by using a burst gate pulse signal; a buffer 13 receiving a comparison reference pulse signal CLK from an external oscillator, and buffering the signal; a phase comparator 14 comparing a phase of the signal buffered in the buffer 13 with a phase of the color synchronous signal in accordance with a frequency of the buffered signal; an all pass filter 15 receiving the signal whose phase is compared in the phase comparator 14, and all pass filtering the signal; and a comparator 16 comparing the all pass filtered signal with the reference voltage Vref and outputting the comparison signal.

The operation of the automatic discrimination device of the broadcasting type will now be described with reference to Figures 1 and 2. When externally receiving the pure color signal as shown in Figure 2(a), the buffer 10 buffers and applies the signal to the bandpass filter 11. The bandpass filter 11 receives the buffered signal, bandpass-filters it, and outputs it to the color synchronous signal detecting unit 12. The color synchronous signal detecting unit 12 detects a burst portion of the filtered signal by using the burst gate pulse signal as shown in Figure 2(b), and outputs the burst signal as shown in Figure 2(c). The burst signal is a color reference signal which is a pure input signal for the color signal discrimination. A frequency of the burst signal is 4.43MHz in a PAL type, and 4.4MHz/4.25MHz in a SECAM type.

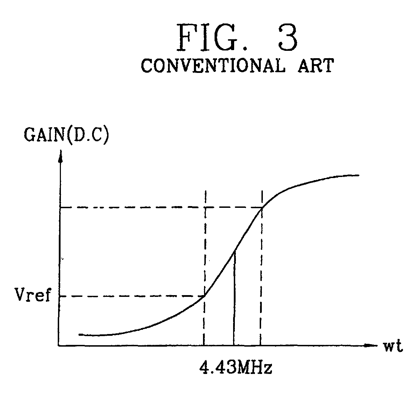

On the other hand, the buffer 13 receives the comparison reference pulse signal for discriminating a color broadcasting type from the external generator. When it is presumed that the PAL type is employed as a comparison reference, a frequency of the inputted pulse signal is 4.43MHz. The buffer 13 receives and buffers the signal, and outputs the signal as shown in Figure 2(d). The phase comparator 14 receives the signal as shown in Figure 2(c) from the color synchronous signal detecting unit 12, compares a phase thereof with a phase of the signal as shown in Figure 2(d) inputted from the buffer 13, and applies the comparison signal to the all pass filter 15. The all pass filter 15 receives the comparison signal from the phase comparator 14, filters the signal according to an all pass filter property as shown in Figure 3, and outputs the filtered signal. The comparator 16 receives the filtered signal from the all pass filter 15, and compares the signal with a level of the reference voltage Vref, thereby outputting the comparison signal.

When it is presumed that a SECAM signal is inputted to the discrimination device of the broadcasting type as a pure color signal, a sub-carrier frequency at a burst portion is 4.4MHz/4.25MHz. Accordingly, when it is compared in phase with the reference clock frequency of 4.43MHz, an error may be detected. In addition, in accordance with the property of the all pass filter 15, in case the sub-carrier frequency of the inputted signal exceeds a slant region centering around the reference frequency of 4.43MHz, a difference may be generated between the sub-carrier frequency and the reference voltage frequency. Thus, the comparator 16 outputs a high potential.

From EP-A-0 596 687 a device is known which detects a broadcasting mode and displays it on the screen, and can record a made identification signal.

US-A-5 787, 259 shows an interconnection between consumer electronic devices using a processor and digital interfaces such as the 1394 bus, and exchange of information relating to the reception.

In accordance with the conventional automatic discrimination device of the broadcasting type, when the phase and color level of the color signal are considerably varied, a detection error may be generated. In addition, since the external clock signal is employed, an error may be generated due to variation of the clock frequency and noise.

Moreover, the automatic discrimination device of the broadcasting type using the PLL method is separately used as an IC for the TV and VCR respectively. The discrimination IC disposed at the VCR has reduced temperature reliability due to a heat generated from the VCR, thereby often causing a field claim.

### SUMMARY OF THE INVENTION

Accordingly, it is a primary object of the present invention to provide an automatic discrimination device of a broadcasting type for a videocassette recorder which can stably detect broadcasting type information detected from a television, by interface-processing a data between the TV and VCR, and a method therefor.

It is another object of the present invention to provide an automatic discrimination device of a broadcasting type for a videocassette recorder which can stably detect various audio/video information including TV image quality information detected from a television, and transmit the information to the VCR, by interface-processing a data between the TV and VCR, and a method therefor.

In order to achieve the above-described objects of the present invention, there is provided an automatic discrimination device of a broadcasting type as defined in claim 1 or a method as defined in claim 7.

The dependent claims relate to preferred embodiments thereof.

### BRIEF DESCRIPTION OF THE DRAWINGS

The present invention will become better understood with reference to the accompanying drawings which are given only by way of illustration and thus are not limitative of the present invention, wherein:
Figure 1 is a block diagram illustrating a conventional automatic discrimination device of a broadcasting type using a PLL method;
Figures 2 (a) to 2(d) are timing diagrams in the configuration of Figure 1;
Figure 3 is a graph showing a property curve of an all pass filter in Figure 2;
Figure 4 is a block diagram illustrating an automatic discrimination device of a broadcasting type for a videocassette recorder in accordance with the present invention;
Figures 5(a) to 5(e) are timing diagrams for embodying the automatic discrimination device of the broadcasting type for the videocassette recorder in accordance with the present invention;
Figure 6 is a flowchart showing an automatic discrimination method of a broadcasting type for a videocassette recorder in accordance with a first embodiment of the present invention; and
Figure 7 is a flowchart for embodying an automatic discrimination device of a broadcasting type for a videocassette recorder in accordance with a second embodiment of the present invention.

### DETAILED DESCRIPTION OF THE PREFERRED EMBODIMENTS

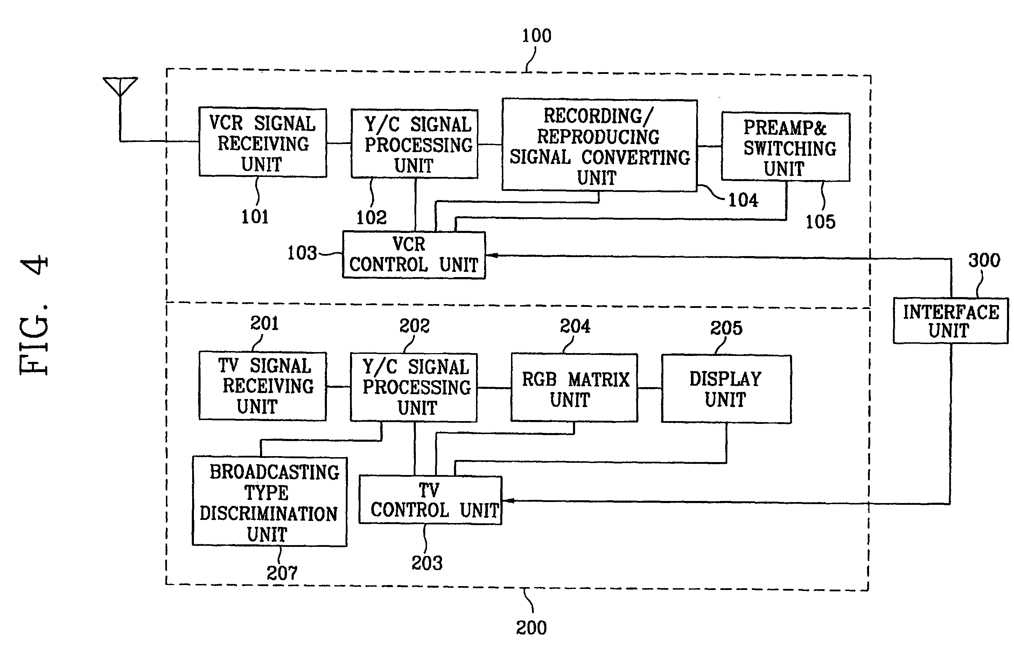

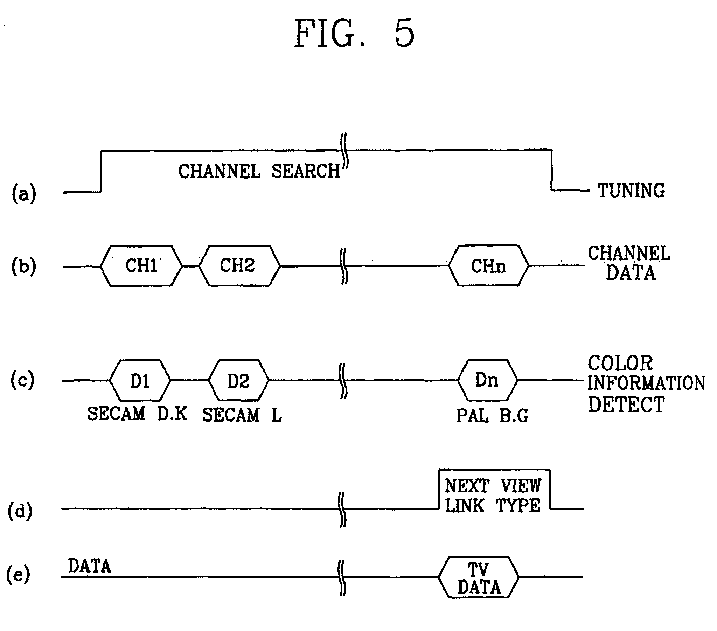

The operation of an automatic discrimination device of a broadcasting type for a videocassette recorder VCR in accordance with a preferred embodiment of the present invention will now be described with reference to Figures 4 and 5.

A TV signal receiving unit 201 in a television TV 200 receives a color signal through an external antenna or input terminal. The TV signal receiving unit 201 receives a signal having data by channels CH1, CH2, ... CHn as shown in Figure 5(b) according to a channel search signal as shown in Figure 5(a), and transmits the received signal to an Y/C signal processing unit 202. The Y/C signal processing unit 202 divides the inputted signal into a luminance signal and a color signal, and transmits the divided signals to a broadcasting type discrimination unit 207 and a TV control unit 203.

The broadcasting type discrimination unit 207 divides the transmitted color broadcasting signal by each channel, detects bursts of each color signal, and discriminates broadcasting types by channels as shown in Figure 5(c). Here, a level and a signal state of the color signals for each channel are detected together. The data of the broadcasting types by channels are stored in the TV control unit 203 connected to a rear portion of the broadcasting signal discrimination unit 207.

On the other hand, the luminance signal and the color signal divided in the Y/C signal processing unit 202 are directly transmitted to the TV control unit 203, and at the same time transmitted to a display unit 205 through an RGB matrix unit 204, and thus displayed as an image under the control of the TV control unit 203.

As described above, the TV control unit 203 receives and stores information regarding the color broadcasting types of each channel and the signal states from the broadcasting type discrimination unit 207, receives the signal processed in the Y/C signal processing unit 202, controls a whole operation of the TV 200, and performs a control operation in order to embody an A/V link, especially the next view link to be discussed later.

A method for controlling the VCR operation by using the data such as the broadcasting type stored in the TV control unit 203 will now be explained. When an automatic broadcasting type detection type is set in the VCR, the data stored in the TV control unit 203 is transmitted to the VCR control unit 103 through the interface unit 300. That is, the next view link system is driven, and thus the data such as the broadcasting types by each channel stored in the TV control unit 203 are transmitted and stored into the VCR control unit 103 of the VCR 100 through a Scart jack. For example, the VCR signal receiving unit 101 receives the signals as shown in Figure 5(b). When intending to record channel 1 among.the signals, the VCR control unit 103 selects a SECAM color processor, and performs an automatic recording operation in order to record channel 1 in the SECAM type which is a broadcasting type of channel 1 transmitted from the TV control unit 203. On the other hand, when intending to record channel n among the signals as shown in Figure 5(b), the VCR control unit 103 selects a PAL color processor, and carries out an automatic recording operation in order to record channel n in the PAL type which is a broadcasting type of channel n transmitted from the TV control unit 203.

Accordingly, when programmed to record, the VCR 100 can select a color processor suitable for the broadcasting type of the selected channel, and perform a recording operation by using the data transmitted from the TV control unit without using a special IC chip for detecting the broadcasting type.

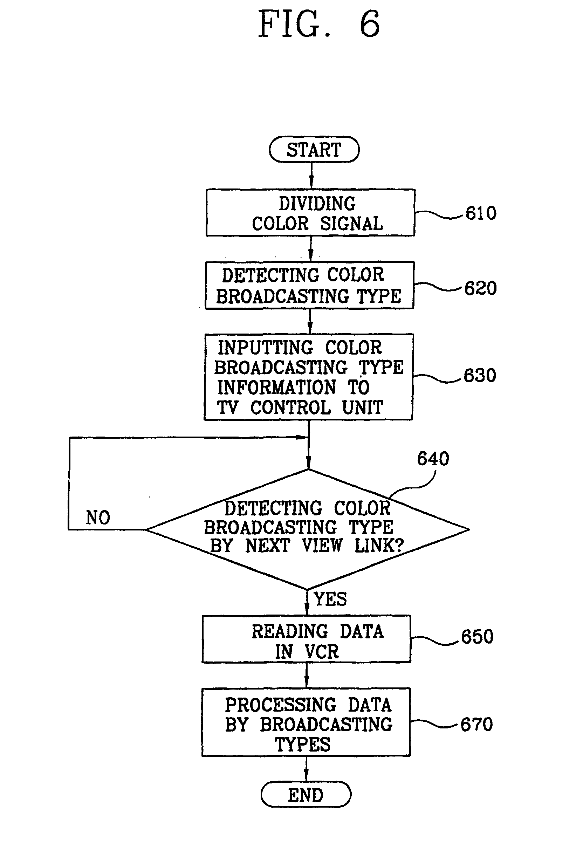

Figure 6 is a flowchart showing the automatic discrimination method of the broadcasting type for the VCR.

Firstly, the color signal of the broadcasting signal inputted through the TV signal receiving unit is divided by channels CH1, CH2, ..., CHn (Step 610). The bursts of the color signals divided by channels are detected, thereby detecting the broadcasting types of each channel (Step 620). The information regarding the detected broadcasting type is inputted into the TV control unit (Step 630). Thereafter, the VCR unit detects whether the broadcasting type information is transmitted from the TV control unit to the VCR control unit through the next view link (Step 640). Here, in case the broadcasting type information is transmitted, the VCR reads the broadcasting type information (Step 650), and processes the data for the VCR operation in accordance with the color broadcasting type (Step 670).

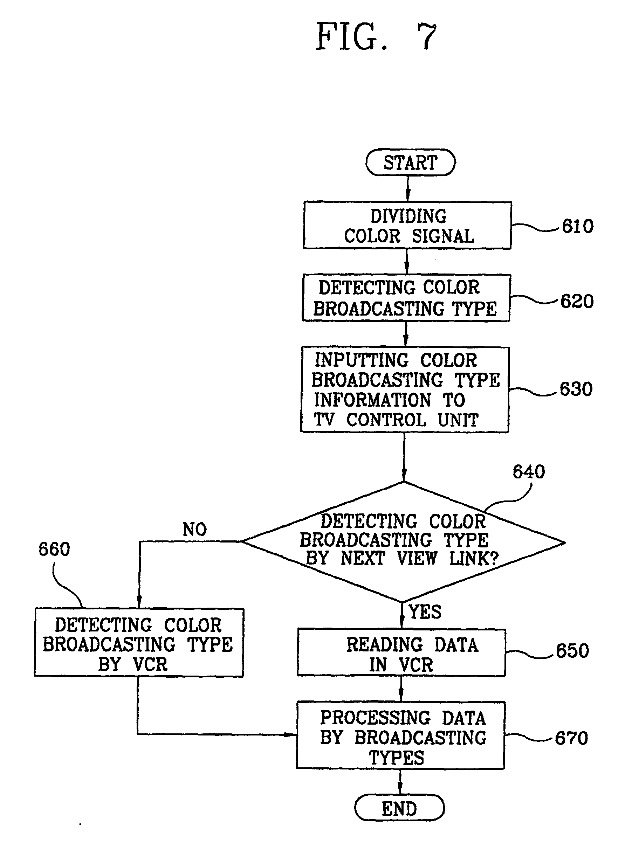

On the other hand, Figure 7 is a flowchart showing a second embodiment of the present invention in a state where the automatic discrimination device of the broadcasting type in accordance with the present invention is employed for the conventional VCR provided with a broadcasting signal discrimination unit. As shown therein, the second embodiment includes the step of detecting the broadcasting type as shown in Figure 6. However, according to the second embodiment, when the next view link has a problem, the broadcasting type is detected in a conventional method. That is, step 610 to step 640 are identical in the first and second embodiments of the present invention. However, when the next view link is not able to detect the broadcasting type information stored in the TV control unit, the broadcasting type is detected through the broadcasting signal discrimination unit disposed at the VCR according to the conventional method (Step 660). That is, the data by color broadcasting signal are processed according to the detected broadcasting type, identically to the first embodiment of the present invention in Figure 6 (Step 670).

As discussed earlier, in accordance with the present invention, the TV broadcasting type is automatically detected by employing the next view link system, without using a special circuit in the VCR, which results in a reduced cost Furthermore, temperature reliability is improved, and the broadcasting type is rapidly stably detected during a reproducing operation.

As the present invention may be embodied in several forms without departing from the spirit or essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the meets and bounds of the claims, or equivalences of such meets and bounds are therefore intended to be embraced by the appended claims.

## Claims

1. An apparatus for automatically discriminating a television broadcasting type such as PAL or SECAM of a television broadcasting signal for a video cassette recorder, the apparatus comprising:
a TV signal receiver (201) for receiving said television broadcasting signal in a TV;
a discriminator (207) for discriminating the television broadcasting type based on comparing a color burst signal from the television broadcasting signal with a reference color bust signal;
a first controller (203) for outputting the discriminated television broadcasting type data to the video cassette recorder (100);
a second controller (103) in the video cassette recorder (100) for receiving the outputted television broadcasting type data from the first controller (203), and controlling an Y/C signal processor (102) to process the television broadcasting signal in accordance with the television broadcasting type data from the first controller (103);
an Y/C signal processor (102) for processing the television broadcasting signal by the second controller (103); and
an interface unit (300) for transmitting the television broadcasting type data from the first controller (203) to the second controller (103).

2. The apparatus according to claim 1, wherein the discriminator (207) comparing a color burst signal of a PAL or SECAM signal with a PAL color burst signal as said reference color burst signal.

3. The apparatus according to claim 2, wherein the mean frequency of said PAL color burst signal is 4,43 MHz.

4. The apparatus according to claim 1, wherein the interface unit (300) transmits the television broadcasting type data through the next view link.

5. The apparatus according to claim 1, wherein image quality data and sound signal type data are transmitted from the TV(200) to the VCR(100) through the interface unit (300).

6. The apparatus according to claim 1, wherein the discriminator (207) further comprises a broadcasting type discriminator unit in the VCR (100) which is used in the case the VCR (100) does not receive the broadcasting type data from the TV (200).

7. A method for automatically discriminating a television broadcasting type such as PAL or SECAM of a television broadcasting signal for a video cassette recorder, the method comprising:
discriminating the television broadcasting type based on comparing a color burst signal from the television broadcasting signal with a reference color burst signal;
transmitting the discriminated television broadcasting type data from a first controller (203) of a TV (200) into a second controller (103) of the VCR (100);
receiving the transmitted television broadcasting type data from the first controller (203); and
processing the television broadcasting signal in accordance with the broadcasting type data transmitted to the VCR (100) by the second controller (203).

8. The method according to claim 7, wherein the step of discriminating the broadcasting type includes comparing a color burst signal of a PAL or a SECAM signal with a PAL color burst signal as said reference color burst signal.

## Patentansprüche

1. Einrichtung zum automatischen Unterscheiden einer Fernsehrundfunkart, z.B. PAL oder SECAM, eines Fernsehrundfunksignals für einen Videokassettenrekorder, wobei die Einrichtung aufweist:
einen Fernsehsignalempfänger (201) zum Empfangen des Fernsehrundfunksignals in einem Fernsehgerät;
einen Diskriminator (207) zum Unterscheiden der Fernsehrundfunkart auf der Basis eines Vergleichs eines Farbsynchronsignals aus dem Fernsehrundfunksignal mit einem Bezugsfarbsynchronsignal;
eine erste Steuereinrichtung (203) zum Ausgeben der unterschiedenen Fernsehrundfunkartdaten an den Videokassettenrekorder (100);
eine zweite Steuereinrichtung (103) in dem Videokassettenrekorder (100) zum Aufnehmen der von der ersten Steuereinrichtung (203) ausgegebenen Fernsehrundfunkartdaten und zum Steuern eines Luminanz/Farbsignalprozessors (102) zum Verarbeiten des Fernsehrundfunksignals entsprechend den Fernsehrundfunkartdaten aus der ersten Steuereinrichtung (103);
einen Luminanz/Farbsignalprozessor (102) zum Verarbeiten des Fernsehrundfunksignals durch die zweite Steuereinrichtung (103); und
eine Schnittstelleneinheit (300) zum Übertragen der Fernsehrundfunkartdaten aus der ersten Steuereinrichtung (203) zur zweiten Steuereinrichtung (103).

2. Einrichtung nach Anspruch 1, bei der der Diskriminator (207) ein Farbsynchronsignal eines PAL- oder SECAM-Signals mit einem PAL-Farbsynchronsignal als das Bezugsfarbsynchronsignal vergleicht.

3. Einrichtung nach Anspruch 2, bei der die mittlere Frequenz des PAL-Farbsynchronsignals 4,43 MHz beträgt.

4. Einrichtung nach Anspruch 1, bei der die Schnittstelleneinheit (300) die Fernsehrundfunkartdaten über die nächste Sichtverbindung überträgt.

5. Einrichtung nach Anspruch 1, bei der Bildqualitätsdaten und Tonsignalartdaten über die Schnittstelleneinheit (300) von dem Fernsehgerät (200) zum Videokassettenrekorder (100) übertragen werden.

6. Einrichtung nach Anspruch 1, bei der der Diskriminator (207) ferner eine Rundfunkartdiskriminatoreinheit in dem Videokassettenrekorder (100) aufweist, die in dem Fall benutzt wird, daß der Videokassettenrekorder (100) die Rundfunkartdaten nicht vom Fernsehgerät (200) empfängt.

7. Verfahren zum automatischen Unterscheiden einer Fernsehrundfunkart, z.B. PAL oder SECAM, eines Fernsehrundfunksignals für einen Videokassettenrekorder, wobei das Verfahren aufweist:
das Unterscheiden der Fernsehrundfunkart auf der Basis eines Vergleichs eines Farbsynchronsignals aus dem Fernsehrundfunksignal mit einem Bezugsfarbsynchronsignal;
das Übertragen der unterschiedenen Fernsehrundfunkartdaten von einer Steuereinrichtung (203) eines Fernsehgeräts (200) in eine zweite Steuereinrichtung (103) des Videokassettenrekorders (100);
das Aufnehmen der übertragenen Fernsehrundfunkartdaten aus der ersten Steuereinrichtung (203) und
eine Luminanz/Farbverarbeitung des Fernsehrundfunksignals entsprechend den Rundfunkartdaten, die durch die zweite Steuereinrichtung (203) zum Videokassettenrekorder (100) übertragen wurden.

8. Verfahren nach Anspruch 7, bei dem der Schritt des Unterscheidens der Fernsehrundfunkart das Vergleichen eines Farbsynchronsignals eines PAL- oder SECAM-Signals mit einem PAL-Farbsynchronsignal als das Bezugsfarbsynchronsignal umfaßt.

## Revendications

1. Un appareil pour effectuer automatiquement une discrimination d'un type de diffusion de télévision, tel que PAL ou SECAM, d'un signal de diffusion de télévision pour un magnétoscope à cassette, comprenant :
un récepteur de signal de télévision (201) pour recevoir le signal de diffusion de télévision dans un téléviseur;
un discriminateur (207) pour effectuer une discrimination du type de diffusion de télévision sur la base d'une comparaison entre un signal de salve de couleur provenant du signal de diffusion de télévision et un signal de salve de couleur de référence;
une première unité de commande (203) pour émettre vers le magnétoscope à cassette (100) les données de type de diffusion de télévision discriminées;
une seconde unité de commande (103) dans le magnétoscope à cassette (100) pour recevoir les données de type de diffusion de télévision émises, provenant de la première unité de commande (203), et pour commander une unité de traitement de signal Y/C (102) pour traiter le signal de diffusion de télévision conformément aux données de type de diffusion de télévision provenant de la première unité de commande (103);
une unité de traitement de signal Y/C (102) pour traiter le signal de diffusion de télévision par la seconde unité de commande (103); et
une unité d'interface (300) pour émettre les données de type de diffusion de télévision de la première unité de commande (203) vers la seconde unité de commande (103).

2. L'appareil selon la revendication 1, dans lequel le discriminateur (207) compare un signal de salve de couleur d'un signal PAL ou SECAM avec un signal de salve de couleur PAL pour le signal de salve de couleur de référence.

3. L'appareil selon la revendication 2, dans lequel la fréquence moyenne du signal de salve de couleur PAL est de 4,43 MHz.

4. L'appareil selon la revendication 1, dans lequel l'unité d'interface (300) émet les données de type de diffusion de télévision par le système Next View Link.

5. L'appareil selon la revendication 1, dans lequel des données de qualité d'image et des données de type de signal de son sont émises par le téléviseur (200) vers le magnétoscope (100) par l'intermédiaire de l'unité d'interface (300).

6. L'appareil selon la revendication 1, dans lequel le discriminateur (207) comprend en outre une unité de discriminateur de type de diffusion dans le magnétoscope (100) qui est utilisée dans le cas où le magnétoscope (100) ne reçoit pas les données de type de diffusion provenant du téléviseur (200).

7. Un procédé pour effectuer automatiquement une discrimination d'un type de diffusion de télévision, tel que PAL ou SECAM, d'un signal de diffusion de télévision pour un magnétoscope à cassette, le procédé comprenant :
la discrimination du type de diffusion de télévision sur la base d'une comparaison d'un signal de salve de couleur provenant du signal de diffusion de télévision avec un signal de salve de couleur de référence;
l'émission des données de type de diffusion de télévision discriminées, à partir d'une première unité de commande (203) d'un téléviseur (200), vers une seconde unité de commande (103) du magnétoscope (100);
la réception des données de type de diffusion de télévision émises par la première unité de commande (203);
et le traitement Y/C, par la seconde unité de commande (203), du signal de diffusion de télévision, conformément aux données de type de diffusion émises vers le magnétoscope (100).

8. Le procédé selon la revendication 7, dans lequel l'étape de discrimination du type de diffusion comprend la comparaison d'un signal de salve de couleur d'un signal PAL ou SECAM avec un signal de salve de couleur PAL constituant le signal de salve de couleur de référence.
